# EUROPÄISCHE PATENTSCHRIFT

(11) **EP 1 365 325 B1**
(45) Veröffentlichungstag und Bekanntmachung des Hinweises auf die Patenterteilung: **19.01.2011**
(21) Anmeldenummer: 02011311.4
(22) Anmeldetag: 23.05.2002
(51) Int. Cl.: G06F 11/36

(54) **Anordnung zur In-Circuit-Emulation einer programmgesteuerten Einheit**
Device for in-circuit-emulation of a programmable unit
Dispositif pour l'émulation en circuit d'une unité à commande par programme

(43) Veröffentlichungstag der Anmeldung: 26.11.2003
(73) Patentinhaber: Infineon Technologies AG, 85579 Neubiberg (DE)
(72) Erfinder: Mayer, Albrecht, Dr., 82041 Deisenhofen (DE)
(74) Vertreter: Repkow, Ines

(56) Entgegenhaltungen:
- EP-A- 0 633 529
- EP-A- 0 905 779
- EP-A- 1 016 969
- US-A- 5 796 987

## Beschreibung

Die vorliegende Erfindung betrifft eine Anordnung zur In-Circuit-Emulation einer programmgesteuerten Einheit.

Dokument D1 = EP-A-0 633 529 offenbart einen Emulationssystem zum Emulieren eines ASIC-Mikrocomputers, der eine Zentraleinheit, eine anwenderspezifische Peripheriefunktionseinheit sowie eine anwenderspezifische Logikschaltung enthält, die auf einem einzelnen Chip integriert sind, wobei das System eine erste intergrierte Schaltung zum Emulieren der Zentraleinheit sowie eine zweite und eine dritte integrierte Schaltung enthält, wovon jede aus dem ASIC-Mikrocomputer gebildet ist und getrennt in verschiedenen Auswertechipbetriebartsmodi emuliert werden können.

Bei der programmgesteuerten Einheit handelt es sich beispielsweise um einen Mikroprozessor, einen Mikrocontroller, oder einen Signalprozessor.

Durch die In-Circuit-Emulation einer programmgesteuerten Einheit können während des Betriebes des die programmgesteuerte Einheit enthaltenden Systems die in der programmgesteuerten Einheit herrschenden Zustände und ablaufenden Vorgänge verfolgt und verändert werden.

Insbesondere ist es beispielsweise, aber bei weitem nicht ausschließlich möglich,
- daß die Inhalte interner Register oder Speicher der programmgesteuerten Einheit ausgelesen und ausgegeben oder verändert werden,
- daß innerhalb der programmgesteuerten Einheit übertragene Daten oder Signale aus der programmgesteuerten Einheit ausgegeben werden (Trace-Daten),
- daß die von der programmgesteuerten Einheit auszuführenden Befehle und/oder verwendeten Operanden aus einem anderen Speicher geholt werden als es normalerweise der Fall ist, und/oder
- daß die Ausführung des von der programmgesteuerten Einheit ausgeführten Programmes unterbrochen wird.

Diese und weitere Aktionen können vom Auftreten bestimmter Bedingungen abhängig gemacht werden, beispielsweise, aber bekanntlich nicht ausschließlich vom Erreichen eines bestimmten Wertes des Program Counter.

Durch die Emulation können während des Betriebes des die programmgesteuerte Einheit enthaltenden Systems darin auftretende Fehler lokalisiert und behoben werden, sowie das Verhalten des Systems bei der Ausführung neuer oder modifizierter Programme getestet werden.

Das die programmgesteuerte Einheit enthaltende System wird im folgenden als Zielsystem bezeichnet.

Die programmgesteuerte Einheit, die im normalen Betrieb des Zielsystems zum Einsatz kommt, kann in der Regel nicht so betrieben werden, daß die in ihr herrschenden Zustände und ablaufenden Vorgänge verfolgt und verändert werden können, weil sie aus Platz- und Kostengründen nicht die hierfür erforderlichen Komponenten enthält.

Eine In-Circuit-Emulation kann im allgemeinen nur unter Verwendung einer speziellen Version der programmgesteuerten Einheit durchgeführt werden.

Diese spezielle Version der programmgesteuerten Einheit wird im folgenden als Emulations-Version der programmgesteuerten Einheit bezeichnet; die Version der programmgesteuerten Einheit, die im normalen Betrieb des Zielsystems eingesetzt wird, wird im folgenden als Standard-Version der programmgesteuerten Einheit bezeichnet.

Die Emulations-Version der programmgesteuerten Einheit ist im allgemeinen Bestandteil einer sogenannten Probe, welche während der Emulation die während des normalen Betriebes des Zielsystems zum Einsatz kommende Standard-Version der programmgesteuerten Einheit ersetzt.

Diese Probe verhält sich aus der Sicht des Zielsystems wie die im normalen Betrieb des Zielsystems verwendete Standard-Version der programmgesteuerte Einheit. Dadurch verhält sich das Zielsystem während der Emulation wie im normalen Betrieb, genauer gesagt wie wenn das Programm, das von der auf der Probe vorgesehenen Emulations-Version der programmgesteuerten Einheit ausgeführt wird, von der im normalen Betrieb des Zielsystems zum Einsatz kommenden Standard-Version der programmgesteuerten Einheit ausgeführt werden würde.

Die Probe ist aber nicht nur ein gleichwertiger Ersatz für die im normalen Betrieb des Zielsystems zum Einsatz kommende Standard-Version der programmgesteuerten Einheit: sie ist so aufgebaut, daß auf Veranlassung durch eine externe Steuereinrichtung die für eine Emulation erforderlichen Aktionen durchgeführt werden können.

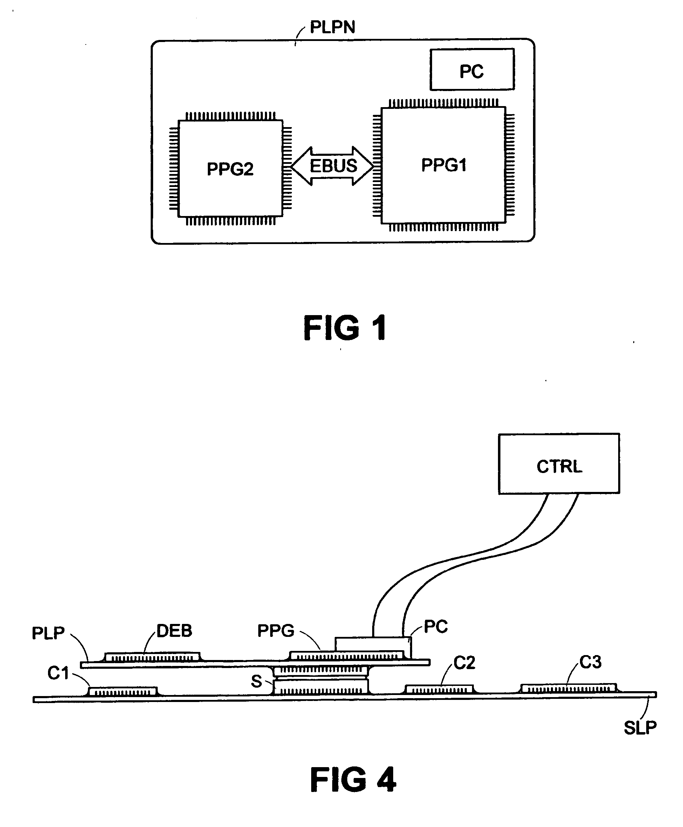

Der prinzipielle Aufbau einer solchen Anordnung ist in Figur 4 gezeigt.

Bei der in der Figur 4 gezeigten Anordnung wird Zielsystem durch eine Leiterplatte SLP gebildet. Auf der Leiterplatte SLP ist ein Sockel S vorgesehen, in den im normalen Betrieb des Zielsystems die Standard-Version der programmgesteuerten Einheit eingesteckt ist. Darüber hinaus können auf der Leiterplatte SLP weitere Halbleiter-Chips C1, C2, und C3 und/oder weitere oder andere Systemkomponenten vorgesehen sein.

Während der Emulation ist in den Sockel S anstelle der Standard-Version der programmgesteuerten Einheit die vorstehend erwähnte Probe eingesteckt. Unter bestimmten Umständen kann die durch die Probe ersetzte programmgesteuerte Einheit während der Emulation im Zielsystem belassen werden. Dies ist der Fall, wenn sich diese programmgesteuerte Einheit während der Emulation in einen Zustand versetzen läßt, in welchem sie inaktiv ist und ihre Ein- und/oder Ausgangsanschlüsse hochohmig sind. In diesem Fall kann die durch die Probe ersetzte programmgesteuerte Einheit auch auf die Leiterplatte SLP aufgelötet sein.

Die Probe besteht im betrachteten Beispiel aus einer Leiterplatte PLP, auf welcher
- die vorstehend bereits erwähnte und in der Figur 4 mit dem Bezugszeichen PPG bezeichnete Emulations-Version der programmgesteuerten Einheit,
- mit dem Bezugszeichen DEB bezeichnete, und im folgenden Debug-Ressourcen genannte Komponenten, und
- ein elektrischer Verbinder PC zur Verbindung der Probe mit einer externen Steuereinrichtung
vorgesehen sind.

Die Debug-Ressourcen DEB sind zur Durchführung der Emulation benötigte Komponenten und enthalten beispielsweise
- einen Overlay-Speicher, den die programmgesteuerte Einheit PPG auf Veranlassung durch die externe Steuereinrichtung anstelle des üblicherweise verwendeten Programm- oder Operandenspeichers als Programm- oder Operandenspeicher verwendet,
- einen Trace-Speicher, in welchem aus der programmgesteuerten Einheit PPG fortlaufend ausgegebene, interne Zustände und/oder Vorgänge repräsentierende (Trace-)Daten wie beispielsweise über interne Busse übertragene Daten und/oder Signale oder die Inhalte interner Register zwischengespeichert werden, und
- eine Breakpoint-Logik, durch welche überwacht wird, ob eine von der externen Steuereinrichtung vorgegebene Bedingung erfüllt ist und durch welche dann, wenn dies der Fall ist, von der externen Steuereinrichtung vorgegebene Aktionen durchgeführt oder veranlaßt werden.

Die bereits mehrfach erwähnte externe Steuereinrichtung ist mit dem Bezugszeichen CTRL bezeichnet und wird beispielsweise durch einen Personal Computer gebildet.

Die auf der Probe vorgesehene Emulations-Version PPG der programmgesteuerten Einheit ist im allgemeinen eine sogenannte Bond-Out-Version der programmgesteuerten Einheit. Eine Bond-Out-Version einer programmgesteuerten Einheit unterscheidet sich von der Standard-Version der betreffenden programmgesteuerten Einheit dadurch, daß sie zusätzliche Ein- und/oder Ausgabeanschlüsse aufweist, die mit in der Standard-Version der programmgesteuerten Einheit nicht zugänglichen Stellen innerhalb der programmgesteuerten Einheit verbunden sind, und über welche zwischen der programmgesteuerten Einheit PPG und der externen Steuereinrichtung CTRL sowie zwischen der programmgesteuerten Einheit PPG und den Debug-Ressourcen DEB für die Emulation erforderliche Daten- und Steuerbefehl-Transfers erfolgen können.

Die Verwendung einer Bond-Out-Version einer programmgesteuerten Einheit ist einerseits sehr vorteilhaft, bringt andererseits jedoch auch diverse Probleme mit sich. Insbesondere ist die Bond-Out-Version einer programmgesteuerten Einheit relativ teuer, weil es schwierig ist, die Bond-Out-Version so zu entwerfen und herzustellen, daß sie sich exakt wie die Standard-Version verhält, und weil die Bond-Out-Version nur in relativ geringen Stückzahlen benötigt wird.

Diese Probleme ließen sich vermeiden oder zumindest abschwächen, wenn bereits die Standard-Version der programmgesteuerten Einheit so ausgebildet wird, daß eine In-Circuit-Emulation möglich ist. Dadurch wird die Standard-Version der programmgesteuerten Einheit jedoch größer und teurer als eine Standard-Version der programmgesteuerten Einheit, die diese Besonderheiten nicht aufweist.

Der vorliegenden Erfindung liegt daher die Aufgabe zugrunde, eine Möglichkeit zu finden, durch welche der Aufwand, der getrieben werden muß, um eine programmgesteuerte Einheit emulieren zu können, auf ein Minimum reduzierbar ist.

Diese Aufgabe wird erfindungsgemäß durch die in Patentanspruch 1 beanspruchte Anordnung gelöst.

Die erfindungsgemäße Anordnung ermöglicht es, die in einer programmgesteuerten Einheit herrschenden Zustände und ablaufenden Vorgänge mit minimalem Aufwand verfolgen und verändern zu können. Insbesondere entfällt die Notwendigkeit, daß für die programmgesteuerte Einheit, die im normalen Betrieb des Zielsystems zum Einsatz kommt, eine dieser exakt entsprechende Emulations-Version verfügbar ist; es kann auch die Emulations-Version einer programmgesteuerten Einheit verwendet werden, die der im normalen Betrieb des Zielsystems verwendeten programmgesteuerten Einheit nur teilweise entspricht.

Vorteilhafte Weiterbildungen der Erfindung sind den Unteransprüchen, der folgenden Beschreibung, und den Figuren entnehmbar.

Die Erfindung wird nachfolgend anhand eines Ausführungsbeispiels unter Bezugnahme auf die Figuren näher erläutert. Es zeigen
- Figur 1: den Aufbau einer Probe der im folgenden beschriebenen Anordnung zur In-Circuit-Emulation einer programmgesteuerten Einheit,
- Figur 2: den Aufbau einer ersten programmgesteuerten Einheit der in der Figur 1 gezeigten Probe,
- Figur 3: den Aufbau einer zweiten programmgesteuerten Einheit der in der Figur 1 gezeigten Probe, und
- Figur 4: den Aufbau einer herkömmlichen Anordnung zur In-Circuit-Emulation einer programmgesteuerten Einheit.

Die im folgenden beschriebene Anordnung zur Emulation einer programmgesteuerten Einheit weist den selben prinzipiellen Aufbau auf wie die eingangs unter Bezugnahme auf die Figur 4 beschriebene herkömmliche Anordnung. D.h., sie besteht ebenfalls aus einer Probe, welche während der Emulation anstelle der im normalen Betrieb des Zielsystems zum Einsatz kommenden programmgesteuerten verwendet wird, und eine externe Steuervorrichtung CTRL zur Steuerung der auf der Probe vorgesehenen Komponenten.

Die Probe der im folgenden beschriebenen Anordnung weist jedoch einen anderen Aufbau auf als die Probe von herkömmlichen Anordnungen zur Emulation von programmgesteuerten Einheiten.

Der Aufbau der Probe der im folgenden beschriebenen Anordnung ist in Figur 1 gezeigt.

Die Probe besteht aus einer Leiterplatte PLPN, auf welcher eine erste programmgesteuerte Einheit PPG1, und eine mit dieser über einen im folgenden als Emulations-Bus bezeichneten Bus EBUS verbundene zweite programmgesteuerte Einheit PPG2, sowie ein elektrischer Verbinder PC vorgesehen sind.

Die erste programmgesteuerte Einheit PPG1 enthält einen Core und diverse weitere Komponenten wie beispielsweise eine oder mehrere Speichereinrichtungen, einen DMA-Controller, einen Analog/Digital-Wandler, einen Digital-Analog-Wandler etc.

Die genannten Komponenten der ersten programmgesteuerten Einheit PPG1 der Probe weisen zumindest teilweise die selbe Funktion und das selbe Verhalten auf wie die Komponenten der während der Emulation durch die Probe ersetzten programmgesteuerten Einheit auf. Dies gilt zumindest für die Cores dieser programmgesteuerten Einheiten. Hinsichtlich der Funktion und des Verhaltens der restlichen Komponenten der programmgesteuerten Einheiten muß keine Übereinstimmung bestehen. D.h., die erste programmgesteuerte Einheit PPG1 der Probe kann mehr, oder weniger, oder andere, oder anders arbeitende Peripherieeinheiten aufweisen als die während der Emulation durch die Probe ersetzte programmgesteuerte Einheit. Vorzugsweise ist es jedoch so, daß die erste programmgesteuerte Einheit PPG1 der Probe und die während der Emulation durch die Probe ersetzte programmgesteuerte Einheit neben dem Core möglichst viele Komponenten aufweisen, deren Funktion und Verhalten übereinstimmen.

Die erste programmgesteuerte Einheit PPG1 enthält darüber hinaus auch die Debug-Ressourcen, die vorhanden sein müssen, um die internen Zustände und Vorgänge der ersten programmgesteuerten Einheit PPG1 verfolgen und verändern zu können. Die Debug-Ressourcen und der Rest der ersten programmgesteuerten Einheit PPG1 können auf einem gemeinsamen Halbleiter-Chip oder auf verschiedenen Halbleiter-Chips untergebracht sein.

Die zweite programmgesteuerte Einheit PPG2 enthält ebenfalls einen Core und diverse weitere Komponenten, wobei diese weiteren Komponenten der zweiten programmgesteuerten Einheit PPG2 jedoch zumindest teilweise andere oder sich anders verhaltende Komponenten sind als die Komponenten der ersten programmgesteuerten Einheit PPG1 der Probe.

Die weiteren Komponenten der zweiten programmgesteuerten Einheit PPG2 der Probe weisen zumindest teilweise die selbe Funktion und das selbe Verhalten wie die Komponenten der während der Emulation durch die Probe ersetzten programmgesteuerten Einheit auf. Genauer gesagt ist es so, daß die zweite programmgesteuerte Einheit PPG2 der Probe alle Komponenten enthält, die in der durch die Probe ersetzten programmgesteuerten Einheit enthalten sind, und die in der ersten programmgesteuerten Einheit PPG1 der Probe nicht vorhanden sind. Die zweite programmgesteuerte Einheit PPG2 kann jedoch mehr, oder weniger oder andere Komponenten aufweisen als die durch die Probe ersetzte programmgesteuerte Einheit.

Damit existiert von jeder Komponente der durch die Probe ersetzten programmgesteuerten Einheit in der ersten programmgesteuerten Einheit PPG1 der Probe und/oder in der zweiten programmgesteuerten Einheit PPG2 der Probe eine entsprechende Komponente mit identischer Funktion und identischem Verhalten.

Die Komponenten der durch die Probe ersetzten programmgesteuerten Einheit und die Komponenten der programmgesteuerten Einheiten PPG1 und PPG2 der Probe, die die selbe Funktion und das selbe Verhalten aufweisen, müssen nicht vollkommen identisch sein. Insbesondere ist es im allgemeinen zulässig, daß die betreffenden Komponenten der programmgesteuerten Einheiten PPG1 und PPG2 der Probe leistungsfähiger sind als die entsprechenden Komponenten der durch die Probe ersetzten programmgesteuerten Einheit. Beispielsweise ist es möglich, daß ein in den programmgesteuerten Einheiten PPG1 oder PPG2 vorgesehener Speicher eine größere Speicherkapazität aufweist als der entsprechende Speicher der durch die Probe ersetzten programmgesteuerten Einheit.

Weil von jeder Komponente der durch die Probe ersetzten programmgesteuerten Einheit in der ersten programmgesteuerten Einheit PPG1 der Probe und/oder in der zweiten programmgesteuerten Einheit PPG2 der Probe eine entsprechende Komponente mit identischer Funktion und identischem Verhalten vorhanden sind, können die programmgesteuerten Einheiten PPG1 und PPG2 so zusammenarbeiten, daß sie aus der Sicht des Zielsystems das selbe Verhalten aufweisen wie die durch die Probe ersetzte programmgesteuerte Einheit.

Wie bereits mehrfach erwähnt wurde, ersetzt die Probe während der Emulation die im normalen Betrieb des Zielsystems in diesem zum Einsatz kommende programmgesteuerte Einheit.

Die Probe wird hierbei mit den Anschlüssen verbunden, über welche die durch die Probe ersetzte programmgesteuerte Einheit im normalen Betrieb des Zielsystems mit diesem verbunden ist. Im betrachteten Beispiel sei angenommen, daß die Verbindung über den Sockel S erfolgt. In diesem Fall wird die Probe in den Sockel S eingesteckt. Die Verbindung der Probe mit dem Zielsystem kann jedoch auch auf beliebige andere Art und Weise erfolgen.

Im mit dem Sockel S verbundenen Zustand der Probe ist ein Teil der Kontaktelemente des Sockels S mit Ein- und/oder Ausgabeanschlüssen der ersten programmgesteuerten Einheit PPG1 verbunden, und ist ein Teil der Kontaktelemente des Sockels S mit Ein- und/oder Ausgabeanschlüssen der zweiten programmgesteuerten Einheit PPG2 verbunden.

Genauer gesagt ist es so,
- daß diejenigen Kontaktelemente des Sockels, die im normalen Betrieb des Zielsystems mit Komponenten der durch die Probe ersetzten programmgesteuerten Einheit verbunden sind, die während der Emulation durch entsprechende Komponenten der ersten programmgesteuerten Einheit PPG1 ersetzt werden, mit den diesen Komponenten zugeordneten Ein- und/oder Ausgabeanschlüssen der ersten programmgesteuerten Einheit PPG1 verbunden sind, und
- daß diejenigen Kontaktelemente des Sockels, die im normalen Betrieb des Zielsystems mit Komponenten der durch die Probe ersetzten programmgesteuerten Einheit verbunden sind, die während der Emulation durch entsprechende Komponenten der zweiten programmgesteuerten Einheit PPG2 ersetzt werden, mit den diesen Komponenten zugeordneten Ein- und/oder Ausgabeanschlüssen der zweiten programmgesteuerten Einheit PPG2 verbunden sind.

Während der Emulation wird in der ersten programmgesteuerten Einheit PPG1 das Programm zur Ausführung gebracht, das im normalen Betrieb des Systems von der durch die Probe ersetzten programmgesteuerten Einheit ausgeführt wird (bei der Verwendung der Emulation zum Lokalisieren und Beheben von auftretenden Fehlern) oder später einmal ausgeführt werden soll (bei Verwendung der Emulation zum Testen einer neuen Software und/oder neuen Operanden).

In der zweiten programmgesteuerte Einheit PPG2 der Probe wird kein Programm ausgeführt, oder ein Programm ausgeführt, welches die Kooperation der programmgesteuerten Einheiten PPG1 und PPG2 der Probe nicht behindern kann. Insbesondere sollte das in der zweiten programmgesteuerten Einheit PPG2 der Probe ausgeführte Programm Zugriffe auf die Komponenten nicht behindern, die entsprechende Komponenten der durch die Probe ersetzten programmgesteuerten Einheit ersetzen und in der ersten programmgesteuerten Einheit PPG1 der Probe nicht vorhanden sind. Ein solches Programm kann beispielsweise ein ausschließlich aus NOP-Befehlen bestehendes Programm sein.

Die erste programmgesteuerte Einheit PPG1 der Probe enthält eine Steuereinrichtung, die überwacht, ob eine der Komponenten der ersten programmgesteuerten Einheit PPG1 der Probe einen Zugriff auf eine in der ersten programmgesteuerten Einheit nicht vorhandene Komponente anfordert. Wenn die Steuereinrichtung feststellt, daß dies der Fall ist, veranlaßt sie einen über den Bus EBUS einen Zugriff auf die entsprechende Komponente der zweiten programmgesteuerte Einheit PPG2.

Damit verhalten sich die programmgesteuerten Einheiten PPG1 und PPG2 der Probe aus der Sicht des Zielsystems wie die durch die Probe ersetzte programmgesteuerte Einheit, und zwar sogar dann, wenn weder die erste programmgesteuerte Einheit PPG1 noch die zweite programmgesteuerte Einheit PPG2 der Probe mit der durch die Probe ersetzten programmgesteuerten Einheit übereinstimmen.

Als zweite programmgesteuerte Einheit PPG2 der Probe kann die durch die Probe ersetzte programmgesteuerte Einheit verwendet werden. Dadurch kann unter allen Umständen sichergestellt werden, daß die programmgesteuerten Einheiten PPG1 und PPG2 der Probe alle Komponenten der durch die Probe ersetzten programmgesteuerten Einheit enthalten.

An die zweite programmgesteuerte Einheit PPG2 der Probe werden keine besonderen Anforderungen gestellt. Insbesondere ist es nicht erforderlich, daß es sich hierbei um eine Emulation ermöglichende programmgesteuerte Einheit handelt.

Nur die erste programmgesteuerte Einheit PPG1 der Probe muß eine eine Emulation ermöglichende programmgesteuerte Einheit sein.

Die erste programmgesteuerte Einheit PPG1 der Probe weist Ein- und/oder Ausgabeanschlüsse auf, über welche sie (über den elektrischen Verbinder PC) mit der externen Steuereinrichtung CTRL verbunden werden kann. Über diese Verbindung können zwischen der ersten programmgesteuerte Einheit PPG1 der Probe und der externen Steuereinrichtung CTRL Daten und Steuersignale transferiert werden. Dabei kann die externe Steuereinrichtung CTRL die erste programmgesteuerte Einheit PPG1 veranlassen, interne Zustände und Vorgänge repräsentierende Daten auszugeben und/oder interne Zustände und Vorgänge zu verändern. Darüber hinaus kann die externe Steuereinrichtung CTRL vorgeben, unter welchen Bedingungen die erste programmgesteuerte Einheit PPG1 die von der externen Steuereinrichtung CTRL vorgegebenen Aktionen auszuführen hat. Sowohl die Ansteuerung der ersten programmgesteuerten Einheit PPG1 als auch die Ausführung der daraufhin auszuführenden Aktionen durch die erste programmgesteuerte Einheit können während der Ausführung des von der ersten programmgesteuerten Einheit auszuführenden Programmes erfolgen.

Der Emulations-Bus EBUS, über welchen die erste programmgesteuerte Einheit PPG1 und die zweite programmgesteuerte Einheit PPG2 miteinander verbunden sind, ist ein ausschließlich während der Emulation verwendeter Bus. D.h., aus den Anschlüssen der ersten programmgesteuerten Einheit PPG1, über welche der Emulations-Bus EBUS mit der ersten programmgesteuerten Einheit verbunden ist, werden ausschließlich während der Emulation Daten ausgegeben.

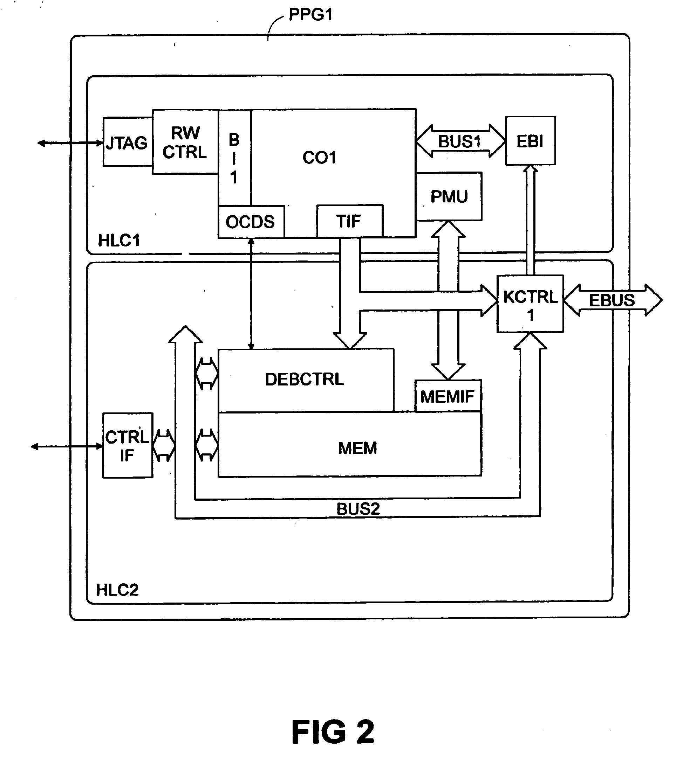

Figur 2 zeigt schematisch den Aufbau eines Ausführungsbeispiels der ersten programmgesteuerten Einheit PPG1 der Probe. Der Vollständigkeit halber sei darauf hingewiesen, daß in der Figur 2 von der ersten programmgesteuerten Einheit nur die vorliegend besonders interessierenden Komponenten, d.h. nur die für die Emulation und die Kooperation der programmgesteuerten Einheiten PPG1 und PPG2 bedeutsamen Komponenten gezeigt sind.

Die erste programmgesteuerte Einheit besteht aus zwei miteinander verbundenen Halbleiter-Chips HLC1 und HLC2.

Der erste Halbleiter-Chip HLC1 enthält
- einen Core CO1,
- eine in den Core CO1 integrierte Befehlsinjektionseinheit BI1,
- ein in den Core CO1 integriertes On-Chip-Debug-Support-Modul bzw. OCDS-Modul OCDS,
- ein in den Core CO1 integriertes Trace-Interface TIF,
- eine mit dem Core CO1 verbundene Programm-Management-Einheit PMU,
- einen mit der Programm-Management-Einheit PMU verbundenen Programmspeicher (in der Figur 2 nicht gezeigt),
- einen mit dem Core CO1 verbundenen internen Bus BUS1,
- am internen Bus BUS1 angeschlossene Peripherieeinheiten, wie beispielsweise einen DMA-Controller, einen Analog/-Digital-Wandler, einen Digital/Analog-Wandler, etc. (in der Figur 2 nicht gezeigt),
- ein am Bus BUS1 angeschlossenes Emulations-Businterface EBI,
- ein über den Steckverbinder PC mit der externen Steuereinrichtung CTRL verbundenes JTAG-Interface JTAG, und
- eine zwischen dem JTAG-Interface JTAG und der Befehlsinjektionseinheit BI angeordnete Schreib/Lese-Steuereinrichtung RWCTRL.

Der zweite Halbleiter-Chip HLC2 enthält
- eine mit dem OCDS-Modul OCDS und dem Trace-Interface verbundene Debug-Steuereinrichtung DEBCTRL,
- einen an der Debug-Steuereinrichtung DEBCTRL angeschlossenen internen Bus BUS2,
- einen mit der Debug-Steuereinrichtung DEBCTRL, mit der Programm-Management-Einheit PMU, und mit dem Bus BUS2 verbundenen Speicher MEM,
- eine zwischen der Programm-Management-Einheit PMU und dem Speicher MEM vorgesehene Schnittstelle MEMIF,
- eine mit dem Trace-Interface TIF, dem internen Bus BUS2, dem Emulations-Businterface EBI, und dem Emulations-Bus EBUS verbundene Kooperations-Steuereinheit KCTRL1, und
- eine mit dem Bus BUS2 verbundene Schnittstelle CTRLIF zum Transfer von Daten zwischen der externen Steuereinrichtung und dem zweiten Halbleiter-Chip HLC2.

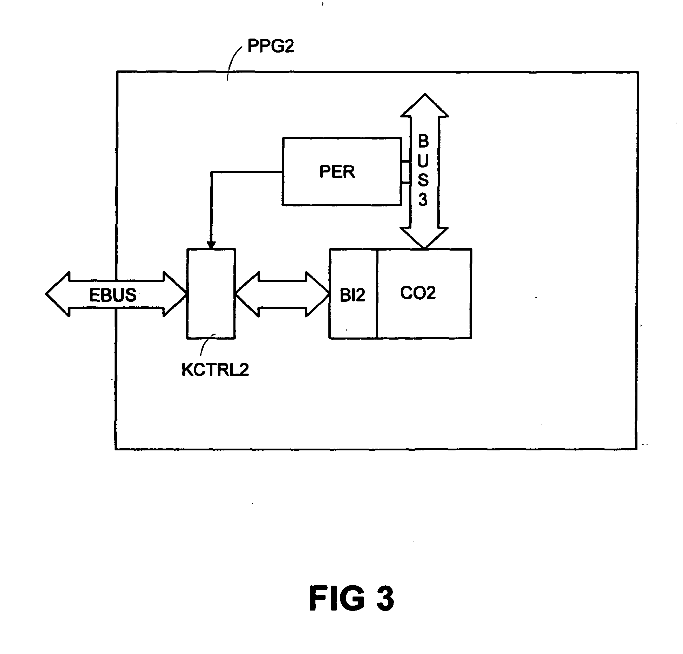

Figur 3 zeigt schematisch den Aufbau eines Ausführungsbeispiels der zweiten programmgesteuerten Einheit PPG2 der Probe. Der Vollständigkeit halber sei darauf hingewiesen, daß in der Figur 3 von der zweiten programmgesteuerten Einheit nur die vorliegend besonders interessierenden Komponenten, d.h. nur die für die Emulation und die Kooperation der programmgesteuerten Einheiten PPG1 und PPG2 bedeutsamen Komponenten gezeigt sind.

Die zweite programmgesteuerte Einheit PPG2 enthält
- einen Core CO2,
- eine in den Core CO2 integrierte Befehlsinjektionseinheit BI2,
- einen mit dem Core CO1 verbundenen internen Bus BUS3,
- eine am internen Bus BUS1 angeschlossene Peripherieeinheit PER, wie beispielsweise einen DMA-Controller, einen Analog/Digital-Wandler, einen Digital/Analog-Wandler, etc.,
- eine mit dem Emulations-Bus EBUS, der Befehlsinjektionseinheit BI2, und der Peripherieeinheit PER verbundene Kooperations-Steuereinheit KCTRL2, und
- in der Figur 3 nicht gezeigte weitere Peripherieeinheiten und Speicher.

Während der Emulation führt der Core CO1 ein Programm aus, das entweder in einem in den Figuren nicht gezeigten Programmspeicher oder in einem Overlay-Speicher gespeichert ist, wobei als Overlay-Speicher der Speicher MEM verwendet wird. Aus welchem Speicher das auszuführende Programm gelesen wird, wird durch die Programm-Management-Einheit PMU bestimmt, wobei diese Programm-Management-Einheit PMU durch die externen Steuereinrichtung CTRL steuerbar ist.

Von der externen Steuereinrichtung CTRL werden auch die Befehlsinjektionseinheit BI1, das OCDS-Modul OCDS, und die Debug-Steuereinrichtung DEBCTRL gesteuert.

Die Ausführung des auszuführenden Programmes und/oder innerhalb oder außerhalb der ersten programmgesteuerten Einheit PPG1 auftretende Ereignisse können es erforderlich machen, daß der Core CO1 oder eine sonstige Komponente der ersten programmgesteuerten Einheit auf eine der in der ersten programmgesteuerten Einheit PPG1 oder in der zweiten programmgesteuerten Einheit PPG2 vorhandene andere Komponente zugreifen muß. Wenn dies der Fall ist, fordert die den Zugriff benötigende Komponente einen entsprechenden Zugriff an.

Die erste programmgesteuerte Einheit PPG1 enthält eine Steuereinrichtung,
- die fortlaufend überwacht, ob ein Zugriff auf eine in der ersten programmgesteuerten Einheit nicht vorhandene Komponente erfolgt, und
- die dann, wenn dies der Fall ist, einen Zugriff auf die entsprechende Komponente der zweiten programmgesteuerten Einheit veranlaßt.

Die genannte Steuereinrichtung ist im betrachteten Beispiel die Kooperations-Steuereinheit KCTRL1. Wenn diese Einrichtung feststellt, daß durch eine Komponente der ersten programmgesteuerten Einheit PPG1 ein Zugriff auf eine in der ersten programmgesteuerten Einheit PPG1 nicht vorhandene Komponente, beispielsweise ein Zugriff auf die Peripherieeinheit PER der zweiten programmgesteuerten Einheit PPG2 angefordert wird, veranlaßt sie über den Emulations-Bus EBUS einen entsprechenden Zugriff auf diese Komponente. Genauer gesagt gibt die Kooperations-Steuereinheit KCTRL1 in diesem Fall über den EBUS entsprechende Steuerbefehle an die zweite programmgesteuerte Einheit PPG2 aus. Die mit dem EBUS verbundene Kooperations-Steuereinheit KCTRL2 der zweiten programmgesteuerten Einheit PPG2 nimmt diese Steuerbefehle entgegen und injiziert sie in den Core CO2 der zweiten programmgesteuerte Einheit PPG2, welcher daraufhin den von der ersten programmgesteuerte Einheit PPG1 angeforderten Zugriff durchführt. Sofern der Zugriff auf die in der ersten programmgesteuerten Einheit PPG1 nicht vorhandene Komponente ein Auslesen von Daten aus dieser Komponente beinhaltet, werden diese Daten durch den Core CO2 ausgelesen und durch die Kooperations-Steuereinheit KCTRL2 über den Emulations-Bus EBUS an die erste programmgesteuerte Einheit PPG1 ausgegeben. Die Kooperations-Steuereinheit KCTRL1 der ersten programmgesteuerten Einheit PPG1 nimmt diese Daten entgegen, und leitet sie über das Emulations-Businterface an die den Zugriff anfordernde Komponente weiter.

Über den Emulations-Bus EBUS können auch Interrupt Requests, die von einer in der zweiten programmgesteuerten Einheit PPG2 enthaltenen Komponente stammen, beispielsweise ein von der Peripherieeinheit PER stammender Interrupt Request an die erste programmgesteuerte Einheit PPG1 weitergeleitet und dort bearbeitet werden.

Die Feststellung, ob ein Zugriff auf eine in der ersten programmgesteuerten Einheit PPG1 nicht vorhandene Komponente angefordert wird, wird unter Berücksichtigung von aus dem Trace-Interface TIF ausgegebenen Trace-Daten getroffen. Die Trace-Daten sind interne Zustände und Vorgänge der ersten programmgesteuerten Einheit PPG1 repräsentierende Daten und Signale und werden vom Trace-Interface TIF in sehr kurzen zeitlichen Abständen ausgegeben. Die Trace-Daten enthalten auch Daten, anhand welcher feststellbar ist, ob und gegebenenfalls welche Komponente der ersten programmgesteuerten Einheit PPG1 auf eine andere Komponente zugreifen möchte, und um welche Komponente es sich bei dieser anderen Komponente handelt. Die Kooperations-Steuereinheit KCTRL1 kann somit aus den Trace-Daten zweifelsfrei ermitteln, ob gerade ein Zugriff auf eine in der ersten programmgesteuerten Einheit nicht vorhandene Komponente angefordert wird.

Es dürfte einleuchten, daß die Feststellung, ob ein Zugriff auf eine in der ersten programmgesteuerten Einheit nicht vorhandene Komponente angefordert wird, auch auf andere Art und Weise erfolgen kann. Beispielsweise könnte vorgesehen werden, daß die Ermittlung, ob ein Zugriff auf eine in der ersten programmgesteuerten Einheit nicht vorhandene Komponente angefordert wird, durch eine Auswertung der Daten durchgeführt wird, welche über eine Leitung oder einen Bus übertragen werden, über die bzw. über den die Daten oder Signale übertragen werden, durch die die zu ermittelnden Zugriffe angefordert werden.

Die vorstehend erwähnten Trace-Daten werden auch der Debug-Steuereinrichtung DEBCTRL zugeführt. Die Debug-Steuereinrichtung extrahiert aus den ihr zugeführten Trace-Daten bestimmte Daten, komprimiert diese, und schreibt sie in den auch als Trace-Speicher dienenden Speicher MEM. Welche Daten aus den Trace-Daten zu extrahieren sind, und unter welchen Bedingungen die extrahierten Trace-Daten in den Speicher MEM zu schreiben sind, wird der Debug-Steuereinrichtung DEBCTRL durch die externe Steuereinrichtung CTRL vorgegeben.

Der Speicher MEM ist ein Speicher mit einer Speicherkapazität von mindestens 64 kBit. Damit steht für die Speicherung von Trace-Daten ein Speicher mit einer Speicherkapazität von mindestens 64 kBit zur Verfügung.

Die in den Speicher MEM geschriebenen Trace-Daten werden über die Schnittstelle CTRLIF, welches beispielsweise eine USB-Schnittstelle sein kann, an die externe Steuereinrichtung CTRL ausgegeben und dort ausgewertet.

Die beschriebene Anordnung ermöglicht es, die in einer programmgesteuerten Einheit herrschenden Zustände und ablaufenden Vorgänge mit minimalem Aufwand verfolgen und verändern zu können. Insbesondere entfällt die Notwendigkeit, daß für die programmgesteuerte Einheit, die im normalen Betrieb des Zielsystems zum Einsatz kommt, eine dieser exakt entsprechende Emulations-Version verfügbar ist; es kann auch die Emulations-Version einer programmgesteuerten Einheit verwendet werden, die der im normalen Betrieb des Zielsystems verwendeten programmgesteuerten Einheit nur teilweise entspricht.

Bezugszeichenliste
- BIx: Befehlsinjektionseinheit
- BUSx: interner Bus
- Cx: Halbleiter-Chip
- COx: Core
- CTRL: Steuereinrichtung
- DEB: Debug-Ressourcen
- DEBCTRL: Debug-Steuereinrichtung
- EBI: Emulations-Businterface
- EBUS: Emulations-Bus
- HLCx: Halbleiter-Chip
- JTAG: JTAG-Interface
- KCTRLx: Kooperations-Steuereinheit
- MEM: Speicher
- MEMIF: Schnittstelle
- OCDS: OCDS-Modul
- PC: elektrischer Verbinder
- PER: Peripherieeinheit
- PLP: Leiterplatte
- PLPN: Leiterplatte
- PMU: Programm-Management-Einheiet
- PPG: programmgesteuerte Einheit
- PPGx: programmgesteuerte Einheit
- RWCTRL: Schreib/Lese-Steuereinrichtung
- S: Sockel
- SLP: Leiterplatte
- TIF: Trace-Interface

## Patentansprüche

1. Anordnung zur In-Circuit-Emulation einer programmgesteuerten Einheit,
wobei die Anordnung eine Probe (PLPN) enthält, welche während der Emulation eine programmgesteuerte Einheit ersetzt, die im normalen Betrieb des die programmgesteuerte Einheit enthaltenden Systems (SLP) zum Einsatz kommt,
wobei auf der Probe eine erste programmgesteuerte Einheit (PPG1) und eine zweite programmgesteuerte Einheit (PPG2) vorgesehen sind,
wobei die erste programmgesteuerte Einheit (PPG1) nur einen Teil der Komponenten der durch die Probe (PLPN) ersetzten programmgesteuerten Einheit enthält,
wobei die zweite programmgesteuerte Einheit (PPG2) die in der ersten programmgesteuerten Einheit (PPG1) nicht enthaltenen Komponenten (PER) der durch die Probe ersetzten programmgesteuerten Einheit enthält,
wobei die erste programmgesteuerte Einheit (PPG1) während der Emulation das Programm ausführt, das im normalen Betrieb des Systems (SLP) von der durch die Probe (PLPN) ersetzten programmgesteuerten Einheit ausgeführt wird,
wobei die erste programmgesteuerte Einheit (PPG1) und die zweite programmgesteuerte Einheit (PPG2) miteinander verbunden sind,
wobei die erste progranmgesteuerte Einheit (PPG1) eine Steuereinrichtung (KCTRL1) enthält, die überwacht, ob eine der Komponenten der ersten programmgesteuerten Einheit (PPG1) einen Zugriff auf eine in der ersten programmgesteuerten Einheit nicht vorhandene Komponente (PFR) anfordert, und die dann, wenn dies der Fall ist, einen entsprechenden Zugriff auf die entsprechende Komponente in der zweiten programmgesteuerten Einheit (PPG2) veranlaßt, und
wobei die erste programmgesteuerte Einheit (PPG1) darüber hinaus auch die Debug-Ressourcen enthält, die vorhanden sein müssen, um die internen Zustände und Vorgänge der ersten programmgesteuerten Einheit (PPG1) verfolgen und verändern zu können.

2. Anordnung nach Anspruch 1,
**dadurch gekennzeichnet,**
**daß** die Steuereinrichtung (KCTRL1) die Ermittlung, ob ein Zugriff auf eine in der ersten programmgesteuerten Einheit (PPG1) nicht vorhandene Komponente (PER) angefordert wird, durch eine Auswertung von in der ersten programmgesteuerten Einheit erzeugten Trace-Daten durchführt.

3. Anordnung nach Anspruch 1,
**dadurch gekennzeichnet,**
**daß** die Steuereinrichtung (KCTRL1) die Ermittlung, ob ein Zugriff auf eine in der ersten programmgesteuerten Einheit (PPG1) nicht vorhandene Komponente (PER) angefordert wird, durch eine Auswertung der Daten durchführt, welche über eine Leitung oder einen Bus übertragen werden, über die bzw. über den die Daten oder Signale übertragen werden, durch die die zu ermittelnden Zugriffe angefordert werden.

4. Anordnung nach einem der vorhergehenden Ansprüche,
**dadurch gekennzeichnet,**
**daß** die Steuereinrichtung (KCTRL1) Zugriffe auf Komponenten in der zweiten programmgesteuerten Einheit (PPG2) veranlaßt, indem sie an die zweite programmgesteuerte Einheit durch den Core (CO2) der zweiten programmgesteuerten Einheit auszuführende Befehle übermittelt.

5. Anordnung nach Anspruch 4,
**dadurch gekennzeichnet,**
**daß** die zweite programmgesteuerte Einheit (PPG2) die ihr von der ersten programmgesteuerten Einheit zugeführten Befehle in den Core (CO2) injiziert und dort ausführt.

6. Anordnung nach einem der vorhergehenden Ansprüche,
**dadurch gekennzeichnet,**
**daß** die zweite programmgesteuerte Einheit (PPG2) eine Steuereinrichtung (KCTRL2) enthält, die Daten, die von in der ersten programmgesteuerten Einheit (PPG1) nicht vorhandenen Komponenten (PER) der zweiten programmgesteuerten Einheit ausgegeben werden, an die erste programmgesteuerte Einheit (PPG1) weiterleitet.

7. Anordnung nach einem der vorhergehenden Ansprüche,
**dadurch gekennzeichnet,**
**daß** die zweite programmgesteuerte Einheit (PPG2) eine Steuereinrichtung (KCTRL2) enthält, die Interrupt Requests, die von in der ersten programmgesteuerten Einheit (PPG1) nicht vorhandenen Komponenten (PER) der zweiten programmgesteuerten Einheit ausgegeben werden, an die erste programmgesteuerte Einheit (PPG1) weiterleitet.

8. Anordnung nach einem der vorhergehenden Ansprüche,
**dadurch gekennzeichnet,**
**daß** von den Anschlüssen, über welche die durch die Probe (PLPN) ersetzte programmgesteuerte Einheit mit dem diese enthaltenden System verbunden ist, während der Emulation ein erster Teil mit der ersten programmgesteuerten Einheit (PPG1), und ein zweiter Teil mit der zweiten programmgesteuerten Einheit (PPG2) verbunden ist.

9. Anordnung nach einem der vorhergehenden Ansprüche,
**dadurch gekennzeichnet,**
**daß** als zweite programmgesteuerte Einheit (PPG2) die während der Emulation durch die Probe ersetzte programmgesteuerte Einheit verwendet wird.

10. Anordnung nach einem der vorhergehenden Ansprüche,
**dadurch gekennzeichnet,**
**daß** die Verbindung der ersten programmgesteuerten Einheit (PPG1) und die zweite programmgesteuerte Einheit (PPG2) durch einen Bus (EBUS) gebildet wird, und daß aus den Anschlüssen der ersten programmgesteuerten Einheit, über welche der Bus mit der ersten programmgesteuerten Einheit verbunden ist, ausschließlich während der Emulation Daten ausgegeben werden.

11. Anordnung nach einem der vorhergehenden Ansprüche,
**dadurch gekennzeichnet,**
**daß** die erste programmgesteuerte Einheit (PPG1) einen Speicher (MEM) zur Speicherung von Trace-Daten enthält, und daß dieser Speicher eine Speicherkapazität von mindestens 64 kBit aufweist.

## Claims

1. Arrangement for the in-circuit emulation of a program-controlled unit,
wherein the arrangement contains a test unit (PLPN) which, during the emulation, replaces a program-controlled unit which is used during normal operation of the system (SLP) containing the program-controlled unit,
wherein the test unit holds a first program-controlled unit (PPG1) and a second program-controlled unit (PPG2),
wherein the first program-controlled unit (PPG1) contains only some of the components of the program-controlled unit replaced by the test unit (PLPN),
wherein the second program-controlled unit (PPG2) contains those components (PER) of the program-controlled unit replaced by the test unit which are not contained in the first program-controlled unit (PPG1),
wherein the first program-controlled unit (PPG1), during the emulation, executes the program which is executed by the program-controlled unit replaced by the test unit (PLPN) during the normal operation of the system (SLP),
wherein the first program-controlled unit (PPG1) and the second program-controlled unit (PPG2) are connected to one another,
wherein the first program-controlled unit (PPG1) contains a control device (KCTRL1) which monitors whether one of the components of the first program-controlled unit (PPG1) requests access to a component (PER) which is not present in the first program-controlled unit, and which, if this is the case, prompts appropriate access to the relevant component in the second program-controlled unit (PPG2), and
wherein the first program-controlled unit (PPG1) furthermore also contains the debug resources which need to be present in order to be able to track and alter the internal states and processes of the first program-controlled unit (PPG1).

2. Arrangement according to Claim 1,
**characterized**
**in that** the control device (KCTRL1) ascertains whether access to a component (PER) which is not present in the first program-controlled unit (PPG1) is requested by evaluating trace data produced in the first program-controlled unit.

3. Arrangement according to Claim 1,
**characterized**
**in that** the control device (KCTRL1) ascertains whether access to a component (PER) which is not present in the first program-controlled unit (PPG1) is requested by evaluating the data which are transmitted via a line or a bus which is used to transmit the data or signals which request the access operations which are to be ascertained.

4. Arrangement according to one of the preceding claims,
**characterized**
**in that** the control device (KCTRL1) prompts access operations to components in the second program-controlled unit (PPG2) by transmitting to the second program-controlled unit commands which are to be executed by the core (CO2) of the second program-controlled unit.

5. Arrangement according to Claim 4,
**characterized**
**in that** the second program-controlled unit (PPG2) injects the commands supplied to it by the first program-controlled unit into the core (CO2) and executes them therein.

6. Arrangement according to one of the preceding claims,
**characterized**
**in that** the second program-controlled unit (PPG2) contains a control device (KCTRL2) which forwards data which are output by components (PER) of the second program-controlled unit which are not present in the first program-controlled unit (PPG1) to the first program-controlled unit (PPG1).

7. Arrangement according to one of the preceding claims,
**characterized**
**in that** the second program-controlled unit (PPG2) contains a control device (KCTRL2) which forwards interrupt requests which are output by components (PER) of the second program-controlled unit which are not present in the first program-controlled unit (PPG1) to the first program-controlled unit (PPG1).

8. Arrangement according to one of the preceding claims,
**characterized**
**in that** of the connections by means of which the program-controlled unit replaced by the test unit (PLPN) is connected to the system containing it, a first portion is connected to the first program-controlled unit (PPG1) and a second portion is connected to the second program-controlled unit (PPG2) during the emulation.

9. Arrangement according to one of the preceding claims,
**characterized**
**in that** the second program-controlled unit (PPG2) used is the program-controlled unit which is replaced by the test unit during the emulation.

10. Arrangement according to one of the preceding claims,
**characterized**
**in that** the connection of the first program-controlled unit (PPG1) and the second program-controlled unit (PPG2) is formed by a bus (EBUS), and in that data are output from the connections of the first program-controlled unit, by means of which the bus is connected to the first program-controlled unit, exclusively during the emulation.

11. Arrangement according to one of the preceding claims,
**characterized**
**in that** the first program-controlled unit (PPG1) contains a memory (MEM) for storing trace data, and in that said memory has a storage capacity of at least 64 kbit.

## Revendications

1. Arrangement d'émulation en circuit d'une unité programmable,
l'arrangement contenant une sonde (PLPN), laquelle remplace pendant l'émulation une unité programmable qui est utilisée pendant le fonctionnement normal du système (SLP) qui contient l'unité programmable,
une première unité programmable (PPG1) et une deuxième unité programmable (PPG2) étant prévues sur la sonde,
la première unité programmable (PPG1) ne contenant qu'une partie des composants de l'unité programmable remplacée par la sonde (PLPN),
la deuxième unité programmable (PPG2) contenant les composants (PER) de l'unité programmable remplacée par la sonde qui ne sont pas contenus dans la première unité programmable (PPG1),
la première unité programmable (PPG1), pendant l'émulation, exécutant le programme qui est exécuté par l'unité programmable remplacée par la sonde (PLPN) pendant le fonctionnement normal du système (SLP),
la première unité programmable (PPG1) et la deuxième unité programmable (PPG2) étant reliées entre elles,
la première unité programmable (PPG1) contenant un dispositif de commande (KCTRL1) qui surveille si l'un des composants de la première unité programmable (PPG1) demande un accès à un composant (PER) non présent dans la première unité programmable et qui, si c'est le cas, initie un accès en conséquence au composant correspondant dans la deuxième unité programmable (PPG2), et
la première unité programmable (PPG1) contenant en plus également les ressources de débogage qui doivent être présentes pour pouvoir suivre et modifier les états et les opérations internes de la première unité programmable (PPG1).

2. Arrangement selon la revendication 1, **caractérisé en ce que** le dispositif de commande (KCTRL1) effectue la détermination d'une demande d'accès à un composant (PER) non présent dans la première unité programmable (PPG1) par une interprétation des données de trace générées dans la première unité programmable.

3. Arrangement selon la revendication 1, **caractérisé en ce que** le dispositif de commande (KCTRL1) effectue la détermination d'une demande d'accès à un composant (PER) non présent dans la première unité programmable (PPG1) par une interprétation des données qui sont transmises sur une ligne ou sur un bus sur laquelle ou lequel sont transmis des signaux ou des données par le biais desquels sont demandés les accès à déterminer.

4. Arrangement selon l'une des revendications précédentes, **caractérisé en ce que** le dispositif de commande (KCTRL1) initie un accès aux composants dans la deuxième unité programmable (PPG2) en communiquant à la deuxième unité programmable les instructions à exécuter par le noyau (CO2) de la deuxième unité programmable.

5. Arrangement selon la revendication 4, **caractérisé en ce que** la deuxième unité programmable (PPG2) injecte et exécute dans le noyau (CO2) les instructions qui lui sont acheminées par la première unité programmable.

6. Arrangement selon l'une des revendications précédentes, **caractérisé en ce que** la deuxième unité programmable (PPG2) contient un dispositif de commande (KCTRL2) qui retransmet à la première unité programmable (PPG1) les données qui sont délivrées par les composants (PER) de la deuxième unité programmable qui ne sont pas présents dans la première unité programmable (PPG1).

7. Arrangement selon l'une des revendications précédentes, **caractérisé en ce que** la deuxième unité programmable (PPG2) contient un dispositif de commande (KCTRL2) qui retransmet à la première unité programmable (PPG1) les demandes d'interruption qui sont délivrées par les composants (PER) de la deuxième unité programmable qui ne sont pas présents dans la première unité programmable (PPG1).

8. Arrangement selon l'une des revendications précédentes, **caractérisé en ce que** pendant l'émulation, une première partie des bornes par le biais desquelles l'unité programmable remplacée par la sonde (PLPN) est reliée avec le système qui la contient est reliée avec la première unité programmable (PPG1) et une deuxième partie avec la deuxième unité programmable (PPG2).

9. Arrangement selon l'une des revendications précédentes, **caractérisé en ce que** l'unité programmable remplacée par la sonde pendant l'émulation est utilisée comme deuxième unité programmable (PPG2).

10. Arrangement selon l'une des revendications précédentes, **caractérisé en ce que** la liaison de la première unité programmable (PPG1) et de la deuxième unité programmable (PPG2) est réalisée par un bus (EBUS) et que des données sont exclusivement délivrées pendant l'émulation par les bornes de la première unité programmable par le biais desquelles le bus est relié avec la première unité programmable.

11. Arrangement selon l'une des revendications précédentes, **caractérisé en ce que** la première unité programmable (PPG1) contient une mémoire (MEM) pour enregistrer les données de trace et que cette mémoire présente une capacité de mémorisation d'au moins 64 kbits.
